**Europäisches Patentamt**

**European Patent Office**

**Office européen des brevets**

(11) Veröffentlichungsnummer : **0 422 286 B1**

(12) # EUROPÄISCHE PATENTSCHRIFT

(45) Veröffentlichungstag der Patentschrift :
20.05.92 Patentblatt 92/21

(51) Int. Cl.⁵ : **E05D 7/10**

(21) Anmeldenummer : **89121158.3**

(22) Anmeldetag : **15.11.89**

(54) **Bordwandscharnier.**

(30) Priorität : **13.10.89 DE 8912213 U**

(43) Veröffentlichungstag der Anmeldung :
**17.04.91 Patentblatt 91/16**

(45) Bekanntmachung des Hinweises auf die
Patenterteilung :
**20.05.92 Patentblatt 92/21**

(84) Benannte Vertragsstaaten :
**AT BE CH DE ES FR GB IT LI LU NL SE**

(56) Entgegenhaltungen :
EP-A- 0 146 651
DE-A- 3 110 106
DE-A- 3 414 401

(73) Patentinhaber : **Karl Hildebrand GmbH & Co.
KG
Bessemerstrasse 9
W-4006 Erkrath (DE)**

(72) Erfinder : **Woitke, Volker
Paracelsusstr. 89c
W-5620 Velbert 1 (DE)**

(74) Vertreter : **Weber, Otto Ernst, Dipl.-Phys. et al
Weber & Heim Hofbrunnstrasse 36
W-8000 München 71 (DE)**

EP 0 422 286 B1

## Beschreibung

Die Erfindung betrifft ein Bordwandscharnier gemäß dem Oberbegriff des Anspruchs 1.

Aus dem deutschen Gebrauchsmuster G 80 20 641 ist ein Bordwandscharnier bekannt, bei welchem der Scharnierbolzen stationär am Fahrzeug und das Lagerauge an der Bordwand angebracht sind. In senkrechter Stellung, d.h. wenn die Bordwand geschlossen ist oder senkrecht nach unten geklappt ist, verhindert eine versetzt zum Lagerauge angebrachte, den stationären Bolzenkopf hintergreifende Abwinkelung, daß die Bordwand durch Abziehen des Lagerauges vom Bolzen entfernt werden kann. Der Bolzenkopf ist mit einer Aussparung versehen, die bei einer horizontalen Abschwenkung der Bordwand die Abwinkelung zum Herausziehen der Bordwand freigibt. Somit entfällt die Sicherung gerade in derjenigen Bordwandstellung, die bei einem Ent- oder Beladevorgang an einer Laderampe typischerweise eingenommen wird. Es besteht daher die Gefahr, daß die Bordwand während des Ladebetriebs unbeabsichtigt ausgehängt wird.

Ferner ist aus der DE-OS 31 10 106 ein aushängbares Scharnier für eine Bordwand bekannt, bei weiche: der Scharnierbolzen an seinem freien Ende mit einem radial über den Umfang vorstehenden Sperrnocken versehen ist. Eine den- Bolzen aufnehmende Wange ist in zwei Einzelwangen unterteilt, die jeweils eine radial über den Umfang der Ausnehmung vorstehende, gegenseitig versetzt angeordnete Durchbrechung für den Durchtritt des Sperrnocken aufweisen.

Die Anordnung und Ausrichtung der versetzten Durchbrüche können lediglich durch eine genaue Inaugenscheinnahme der Wangen in Durchtrittsrichtung des Bolzens festgestellt werden. Somit ist eine Bedienperson beim Anhängen der Bordwand - insbesondere wenn sie hinter dem Lastfahrzeug steht - nicht in der Lage, die Durchbrechungen zu erkennen und die Bordwand so anzusetzen, daß der Sperrnocken sofort in die zugehörige Durchbrechung eingeführt werden kann. Im praktischen Betrieb muß also erst durch Auf- und Abschwenken der Bordwand ausprobiert werden, unter welchem Winkel die Durchtritte jeweils ausgerichtet sind. In Anbetracht des Gewichts einer Bordwand ist dies jedoch mit großen Kraftanstrengungen verbunden.

Außerdem ist aus dem DE-GM 83 08 305 ein Bordwandscharnier bekannt, bei welchem im Bereich des stationären, lagerseitigen Endes des Scharnierbolzens zwei in Abstand voneinander, senkrecht zum Scharnierbolzen ausgerichtete Steuerungsrippen vorhanden sind. Diese weisen winkelversetzt zueinander je eine Ausnehmung auf, die mit einem lageraugenseitigen Anschlag in der Art einer Schikane in der Weise zusammenwirken, daß die Bordwand beim Abziehen des Lagerauges vom Scharnier nacheinander in zwei verschiedene Winkelstellungen gebracht werden muß. Bei dem gattungsbildenen Scharnier der DE-OS 34 14 401 erfolgt die Arretierung durch einen im Bereich der Scharnierbolzenabstützung radial abstehenden, koaxialen und kreisförmigen Bund, der in eine Ausnehmung am ladeflächenseitigen Scharnierteil eingreift. Ein beabsichtigtes Aushängen der Bordwand ist nur möglich, wenn dieser Bund aus der Ausnehmung geschwenkt, die Scharnierbolzenabstützung nicht mehr an einem Vorsprung einer nach oben offenen Lagerschale anschlägt und eine zweite axiale Endstellung eines zweiten, zum ersten Schwenkbolzen koaxialen und in entgegegesetzte Richtung weisenden Schwenkbolzens in dieser Schale erreicht ist. Zum endgültigen Lösen muß die in einer definierten Winkellage gehaltene Bordwand schräg nach oben in Richtung Fahrzeug und aus der Schale gehoben werden, was mit einer großen Kraftanstrengung verbunden ist. Auch das Einhängen erfordert einen relativ hohen Kraft- und Zeitaufwand.

Der Erfindung liegt die **Aufgabe** zugrunde, ein Bordwandscharnier der eingangs genannten Art anzugeben, dessen beide Teile auf einfache Weise und ohne besondere Kraftanstrengungen gelöst werden können, und welches gleichzeitig zuverlässig gegen ein unbeabsichtigtes Lösen gesichert ist. Diese Aufgabe wird durch die Merkmale des Anspruchs 1 gelöst.

Erfindungsgemäß ist vorgesehen, daß die an einer relativ kurz ausgebildeten Verlängerung angeformte, radial abstehende Sperrenase über die gesamte Länge der Verlängerung reicht und derart ausgerichtet ist, daß durch die Querschnitts-Längsachsen der Scharnierbolzenabstützung und der Sperrnase ein Winkel von etwa 45°, insbesondere etwa 40 ± 10° gebildet ist,... daß der Anschlag aus einer unterseitigen und einer oberseitigen, radial und axial zum Lagerauge versetzten, parallel zum Scharnierbolzen verlaufenden, mit der Scharnierbolzenabstützung zusammenwirkenden, frei abstehenden Rippen sowie einem die beiden Rippen verbindenden, quer zum Scharnierbolzen verlaufenden und mit der Nase zusammenwirkenden Steg besteht, daß die Rippen die Verlängerung und den Schwenkbereich der Nase oben und unten umfassen und dabei mit ihren Stirnseiten jeweils in Achsrichtung vor der Scharnierbolzenabstützung liegen, wenn die Bordwand im wesentlichen vertikal nach oben oder unten abgeschwenkt ist, und im verbleibenden Schwenkbereich die Scharnierbolzenabstützung freigeben, und daß der Steg in Achsrichtung vor dem Schwenkbereich der Nase angeordnet ist und eine derartige Höhe aufweist, daß er die Nase in Achsrichtung bei einem Schwenkwinkel der Bordwand von etwa 40° ± 10° nach unten freigibt.

Die Erfindung hat den Vorteil, daß die Nase beim Ein- und Aushängen der Bordwand für den Benutzer sichtbar bleibt, so daß er die Bordwand ohne Kraft- und Zeitverlust in die erforderliche Winkelstellung bringen kann. Besonders vorteilhaft ist es, daß in kein zusätzliches An- und Ausheben der in einer bestimmten Winkellage gehaltenen Bordwand erforderlich ist und die Bordwand nach der axialen Verschiebung nach unten entfernt werden kann. In den am häufigsten auftretenden Bordwandstellungen, nämlich wenn diese vollkommen geschlossen oder geöffnet und somit vertikal ausgerichtet ist, erfolgt die Sicherung über die Rippen im ZusammenwirKen mit der Scharnierbolzenabstützung, die beide grundsätzlich beliebig stabil ausgebildet sein können. Die Nase ist hierbei entlastet und außerdem durch die Abschirmung nach oben und unten gegen Beschädigungen geschützt. Außerdem wird das Einführen des Scharnierbolzens in das Lagerauge erleichtert, weil die ober- und unterseitige Rippe und der Steg als Führung dienen. Der Scharnierbolzen kann daher zunächst zwischen den Rippen auf den Steg aufgesetzt und dann paßgenau axial verschoben werden. Da die Verlängerung des Scharnierbolzens für die Sperrnase relativ kurz ausgebildet ist, werden ein Materialverzug bzw. Materialspannungen wie sie beim Stand der Technik bekannt sind, vermieden.

Eine bevorzugte Weiterbildung der Erfindung besteht darin, daß die Höhe der Rippen sc bemessen ist, daß sie bis zu einem Schwenkwinkel der Scharniervolzenabstützung bzw. der betreffenden Bordwand von etwa bis zu 40° bezüglich der Vertikalen vor der Scharnierbolzenabstützung liegen. Abhängig von dieser Winkelauslegung kann das Lösen der Bordwand in einem Winkelbereich von vorzugsweise 40° ± 10° bezogen auf die Senkrechte im unteren Schwenkbereich realisiert werden. Eine Auslegung für andere Winkelbereiche, z.B. im Bereich 60° bis 30°, ist bei der Erfindung leicht realisierbar. Es ist besonders zweckmäßig, daß die Rippen auf ihrer dem Steg zugewandten Seite eine nach unten zunehmende Abschrägung aufweisen. Diese Maßnahme verleiht nicht nur zusätzliche Stabilität, sondern sie fördert auch das Zentrieren des Scharnierbolzens beim Einführen.

Eine bevorzugte Weiterbildung besteht darin, daß der Übergangsbereich zwischen dem Steg und der unteren Rippe im wesentlichen mit dem Lagerauge fluchtet. Auf diese Weise wird der Schwenkbereich des Stegs soweit wie möglich auch in axialer Richtung abgedeckt, so daß die Nase auch bei nach oben geklappter Bordwand vollständig gegen Schläge oder ähnliches geschützt ist. Außerdem wird die zwischen den Rippen und dem Steg in axialer Richtung verbleibende Öffnung trichterförmig ausgebildet, was die Handhabung der Bordwand beim Ein- und Aushängen erleichtert. Um das unberechtigte Abschrauben der Bordwand vom scharnierbolzenseitigen Scharnierteil bei geschlossenem Laderaum zu verhindern, ist es vorteilhaft, daß die Verschraubung dieses Scharnierteils im Bereich der Rippen erfolgt. Die Rippen kommen dabei unmittelbar vor der Verschraubung zu liegen und verhindern eine Manipulation an der Verschraubung.

Es kann ferner vorteilhaft sein, daß der Scharnierbolzen über das Lagerauge hinaus verlängert ist und daß die Verschraubung des lageraugenseitigen Scharnierteils hinter der Scharnierbolzenverlängerung liegt. Auf diese Weise wird die Verschraubung durch den Scharnierbolzen abgedeckt und ein unberechtigtes Lösen unterbunden.

Nachfolgend wird die Erfindung anhand eines in der Zeichnung dargestellten Ausführungsbeispiels weiter beschrieben.

Fig. 1 zeigt schematisch eine Seitenansicht eines scharnierbolzenseitigen Scharnierteils eines Bordwandscharniers;

Fig. 2 zeigt schematisch eine Ansicht in Achsrichtung II-II gemäß Fig. 1;

Fig. 3 zeigt schematisch eine Seitenansicht eines lageraugenseitigen Scharnierteils;

Fig. 4 zeigt schematisch eine Ansicht IV-IV in Achsrichtung des Scharnierteils gemäß Fig. 3;

Fig. 5 zeigt schematisch eine Draufsicht auf das Scharnierteil gemäß Fig. 3;

Fig. 6 zeigt schematisch eine Draufsicht auf die beiden Scharnierteile gemäß Fig. 1 und Fig. 3 in zusammengesetztem Zustand; und

Fig. 7 zeigt jeweils unterschiedliche Schwenkstellungen des Bordwandscharniers gemäß Fig. 6.

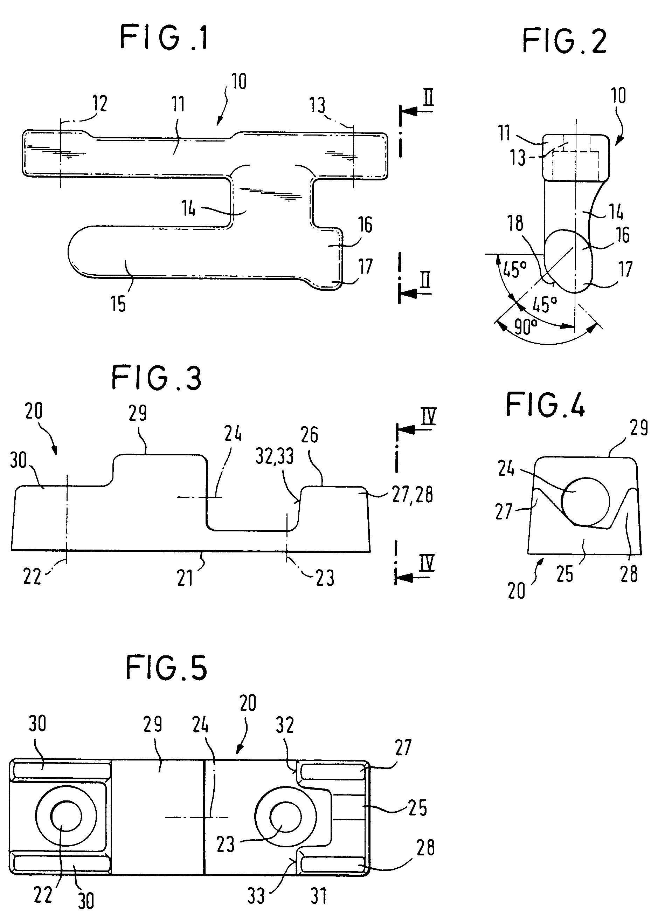

Gemäß Fig. 1 weist ein scharnierbolzenseitiges Scharnierteil 10 einen Flansch 11 mit zwei Bohrungen 12,13 zum Anschrauben an eine Bordwand (nicht dargestellt) auf. Zwischen den beiden Bohrungen 12,13 befindet sich eine Scharnierbolzenabstützung 14 mit einem Scharnierbolzen 15. Dieser ist rückwärtig über die Scharnierbolzenabstützung 14 hinaus mit einer Verlängerung 16 versehen, welche eine Sperrnase 17 trägt.

Die Fig. 2 veranschaulicht das Scharnierteil 10 gemäß einer Seitenansicht II-II. Es wird hierbei ersichtlich, daß die Nase 17 im wesentlichen unter einem Winkel von 45° bezüglich der Längsrichtung der Scharnierbolzenabstützung 14 ausgerichtet ist. Wenn das Scharnierteil 10 an die Bordwand montiert ist, ist die Nase (bezogen auf die Schwenkbewegung und die Horizontalausrichtung der Bordwand) nach oben gerichtet. Wie im Zusammenhang mit dem lageraugenseitigen Scharnierteil 20 (Fig. 3 bis 5) noch weiter erläutert wird, ist die Nase 17 mit einer im wesentlichen tangential zum Scharnierbolzenumfang verlaufenden, unter einem 45° Winkel gelegenen, ebenen Steuerfläche 18 versehen, die mit der Oberseite eines Stegs 25 des lageraugenseitigen Scharnierteils 20 (Fig. 3 bis 5) zusammenwirkt.

Die Fig. 3 zeigt, daß das lagerseitige Scharnierteil 20 einen Flansch 21 mit zwei Bohrungen 22,23 zur lagerflächenseitigen Befestigung aufweist. Zwischen den beiden Bohrungen 22,23 befindet sich ein Block mit einem Lagerauge 24. In vorgegebenem Abstand vom Lagerauge 24 weist das Scharnierteil 20 einen Anschlag 26 auf, welcher ein unbeabsichtigtes Lösen des scharnierbolzenseitigen Scharnierteils 10 verhindert. Der Anschlag 26 besteht aus einer ober- und einer unterseitigen Rippe 27,28, die parallel zur Zeichenebene verlaufen, sowie einem die beiden Rippen 27, 28 verbindenden Steg, welcher senkrecht zur Zeichenebene verläuft und in Fig. 3 von der unterseitigen Rippe 28 verdeckt ist.

Außerdem sind am Block 29 auf der dem Anschlag 26 gegenüberliegenden Seite zwei weitere Rippen 30 angeordnet, welche im zusammengefügten Zustand der Scharnierteile 10, 20 und in vertikaler Stellung der betreffenden Bordwand die zugehörige Bohrung 12 des scharnierbolzenseitigen Scharnierteils 10 überdecken, und damit die entsprechende Schraubverbindung mit der Bordwand gegen unberechtigtes Lösen sichern.

Die Fig. 4 veranschaulicht in der Ansicht IV-IV gemäß Fig. 3 den Verlauf des Stegs 25 sowie der Schmalseiten der Rippen 27,28 in Bezug auf das Lagerauge 24. Es ist ersichtlich, daß beide Rippen 27,28 an ihren dem Steg 25 zugewandten Innenseiten eine Abschrägung von etwa 25° aufweisen. Die oberseitige Rippe 27 geht ferner auf der Breite des Stegs 25 unter einer 45°-Abschrägung in diesen über, wobei dieser Bereich und der benachbarte Stegbereich auf diese Weise im wesentlichen mit dem Lagerauge 24 fluchten. Insgesamt wird durch diese Ausformung der Rippen 27,28 und des Stegs 25 einerseits eine trichterförmige Öffnung gebildet, welche das Einführen des Scharnierbolzens 15 in das Lagerauge 24 erleichtert. Andererseits wird eine zuverlässige Sicherung gegen ein unbeabsichtigtes Lösen des Scharnierbolzens 15 aus dem Lagerauge 24 erreicht, wobei die Rippen 27,28 stirnseitig mit der Scharnierbolzenabstützung 14 und die Nase 17 mit dem Steg 25 zusammenwirken. Einzelheiten hierzu werden im Zusammenhang mit der Fig. 7 erläutert.

Wie aus der Draufsicht der Fig. 5 ersichtlich wird, begrenzen die Rippen 27,28 im Anschluß an den Steg 25 einen Schwenkbereich 31 , in welchem sich die Nase 17 des Scharnierteils 10 in Schwenkrichtung frei bewegen kann, wenn der Scharnierbolzen 15 (Fig. 1) bis zum Anschlag in das Lagerauge 24 gesteckt ist. Der Abstand zwischen dem Block 29 bzw. dem Lagerauge 24 und den zugewandten Stirnseiten 32,33 der Rippen 27,28 ist so bemessen, daß die Scharnierbolzenabstützung 14 (Fig. 1) in abgewinkelter Scharnierstellung Platz findet.

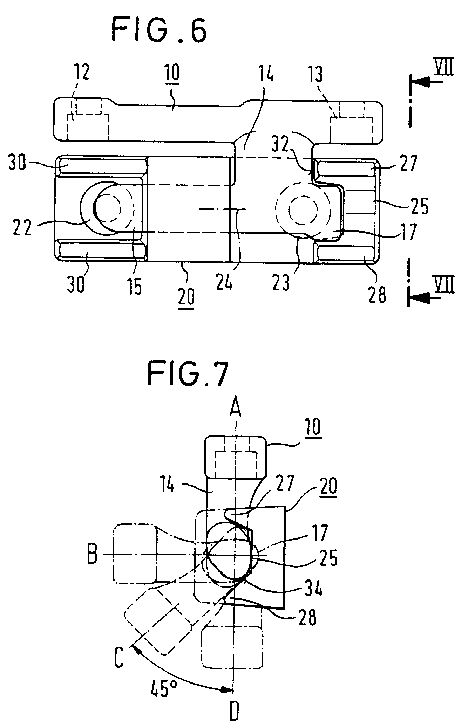

In Fig. 6 ist eine Scharnierstellung gezeigt, bei welcher die Scharnierteile 10,20 um 90° verschwenkt sind, was im eingebauten Zustand der vertikalen, geschlossenen Bordwandstellung entspricht. Die Bohrungen 22,23 sowie die zugehörigen Schraubverbindungen (nicht dargestellt) sind vom freien Ende des Scharnierbolzens 15, welcher über das Scharnierauge 24 hinaus verlängert ist, bzw. von der Scharnierbolzenabstützung 14 in der Weise überdeckt, daß die Schraubverbindungen nicht gelöst werden können. Den gleichen Zweck erfüllt eine der Rippen 30 vor der Bohrung 12 des Scharnierteils 10 und die oberseitige Rippe 27 vor der Bohrung 13.

Die Scharnierbolzenabstützung 14 steht ferner in Eingriff mit der Stirnseite 32 der oberseitigen Rippe 27, welche auf diese Weise ein Entfernen des Scharnierbolzens 15 aus dem Lagerauge 24 verhindert.

Die Nase 17 ist in dieser Stellung entlastet und liegt gegen Beschädigungen geschützt hinter der unteren Rippe 28 und dem Steg 25 bzw. dem trichterförmigen Übergang 34 des Stegs 25 in die untere Rippe 28. Die Seitenansicht VII-VII gemäß Fig. 7 zeigt, daß die Scharnierbolzenabstützung 14 über einen Schwenkbereich von etwa 45° mit der oberen Rippe 27 in Eingriff steht und somit das Scharnierteil 10 in diesem Schwenkbereich sichert (Pos. A). Auch in der Position D, wenn die zugehörige Bordwand vollständig nach unten abgeklappt ist, wird das Scharnierteil 10 ausschließlich von der unteren Rippe 28 im Zusammenwirken mit der Scharnierbolzenabstützung 14 gesichert.

Durch die Höhe der unteren und oberen Rippe 27, 28 ist ein Schwenkbereich von etwa bis zu 40°, bezogen auf die Vertikale, vorgegeben, in welchem die Rippen 27 bzw. 28 mit der Scharnierbolzenabstützung 14 in Eingriff stehen. Beim Abschwenken aus der Position A in eine Position B, wenn die Scharnierbolzenabstützung 14 außer Eingriff mit der oberen Rippe 27 gelangt, erfolgt die Sicherung des Scharnierteils 10 gegen unbeabsichtigtes Lösen über die Nase 17 im Zusammenwirken mit dem Steg 25. Ausschließlich in einer Position C, wenn das Scharnierteil 10 bzw. die zugehörige Bordwand etwa unter einem 40°-Winkel für den unteren Schwenkbereich, bezogen auf die Senkrechte, ausgerichtet ist, ist das Scharnierteil 10 außer Eingriff mit den Rippen 27, 28 und dem Steg 25, und der Scharnierbolzen 15 kann ungehindert aus dem Lagerauge 24 herausgezogen werden. Allein in dieser Position gibt die untere Rippe 28 die Scharnierbolzenabstützung gerade frei und die Ebene 18 an der Nase 17 fluchtet mit der Oberseite des Stegs 25.

Im Hinblick auf die Zollsicherheit bzw. Sicherheit gegen unberechtigten Zugriff im Verschlußzustand der Bordwand überdeckt der Scharnierbolzen 15 mit Verlängerung 16 vorteilhafterweise die in den Bohrungen 22, 23 vorhandenen Schrauben so dicht, daß ein Lösen der Schrauben, gegebenenfalls sogar eine Beschädigung, nicht möglich ist.

**Patentansprüche**

1. Bordwandscharnier mit einem bordwandseitigen Scharnierteil (10), dessen Scharnierbolzenabstützung (14) einen Scharnierbolzen (15) und eine zum Scharnierbolzen (15) koaxiale und in entgegengesetzte Richtung weisende Verlängerung (16) aufweist, einem ladeflächenseitigen, ein Lagerauge (24) zur lösbaren Aufnahme des Scharnierbolzens (15) aufweisenden Scharnierteil (20) sowie mit einer schwenkwinkelabhängigen Aushängesicherung, die eine am Scharnierbolzen (15) radial abstehende Sperrnase (17) sowie einen mit der Sperrnase (17) und der Scharnierbolzenabstützung (14) zusammenwirkenden und Vorsprünge aufweisenden Anschlag (26) am ladeflächenseitigen Scharnierteil (20) aufweist, dadurch **gekennzeichnet** , daß die Sperrnase (17) an der relativ kurz ausgebildeten Verlängerung (16) angeformt ist und über die gesamte axiale Länge der Verlängerung (16) reicht, daß die Sperrnase (17) derart ausgerichtet ist, daß durch die Querschnitts-Längsachsen der Scharnierbolzenabstützung (14) und der Sperrnase (17) ein Winkel von etwa 45°, insbesondere etwa 40 ± 10° gebildet ist, daß der Anschlag (26) aus einer unterseitigen und einer oberseitigen, radial und axial zum Lagerauge (24) versetzten, parallel zum Scharnierbolzen (15) verlaufenden, mit der Scharnierbolzenabstützung (14) zusammenwirkenden, frei abstehenden Rippe (27,28) sowie einem die beiden Rippen (27,28) verbindenden, quer zum Scharnierbolzen (15) verlaufenden und mit der Sperrnase (17) zusammenwirkenden Steg (25) besteht, daß die Rippen (27,28) die Scharnierbolzenverlängerung (16) und den Schwenkbereich (31) der Sperrnase (17) an den zugehörigen Seiten umfassen und dabei ihre Stirnseiten (32,33) jeweils an der Scharnierbolzenabstützung (14) anliegen, wenn die Bordwand im wesentlichen vertikal nach oben oder unten abgeschwenkt ist, und im verbleibenden Schwenkwinkelbereich die Scharnierbolzenabstützung (14) freigeben und daß der Steg (25) in Achsrichtung vor dem Schwenkbereich (31) der Sperrnase (17) angeordnet ist und eine derartige Höhe aufweist, daß er die Sperrnase (17) in Achsrichtung bei einem Schwenkwinkel der Bordwand von etwa 45 Grad, insbesondere etwa 40 Grad ± 10 Grad gegen die Vertikale im unteren Schwenkbereich freigibt.

2. Bordwandscharnier nach Anspruch 1, dadurch **gekennzeichnet**, daß die Höhe der unterseitigen und oberseitigen Rippe (27,28) so bemessen ist, daß sie bis zu einem Schwenkwinkel der Scharnierbolzenabstützung (14) bzw. der betreffenden Bordwand von jeweils bis zu 45 Grad bezüglich der Vertikalen vor der Scharnierbolzenabstützung (14) liegen.

3. Bordwandscharnier nach Anspruch 1 oder 2, dadurch **gekennzeichnet**, daß die unter- und oberseitige Rippe (27,28) auf ihrer dem Steg (25) zugewandten Seite eine nach unten zunehmende Abschrägung aufweisen.

4. Bordwandscharnier nach einem der Ansprüche 1 bis 3, dadurch **gekennzeichnet**, daß der Übergangsbereich zwischen dem Steg (25) und der unterseitigen Rippe (28) im wesentlichen mit dem Lager auge (24) fluchtet.

5. Bordwandscharnier nach einem der vorhergehenden Ansprüche, dadurch **gekennzeichnet**, daß die Verschraubung des scharnierbolzenseitigen Scharnierteils (10) im Bereich der unterseitigen bzw. oberseitigen Rippe (27,28) erfolgt.

6. Bordwandscharnier nach einem der vorhergehenden Ansprüche, dadurch **gekennzeichnet**, daß der Scharnierbolzen (15) über das Lagerauge (24) hinaus verlängert ist, und daß die Verschraubung des lageraugenseitigen Scharnierteils (20) hinter der Scharnierbolzenverlängerung liegt.

**Claims**

1. Tailboard hinge with a tailboard-side hinge part (10), whose hinge pin support (14) has a hinge pin (15) and an extension (16) coaxial to the hinge pin (15) and pointing in the opposite direction, a loading surface-side hinge part (20) having a bearing hole (24) for the detachable reception of the hinge pin (15) and with a pivoting angle-dependent unhinging preventer, which has a retaining nose (17) projecting radially from the hinge pin (15) and a stop (26) on the loading surface-side finge part (20) and having projections and cooperating with the retaining nose (17) and the hinge pin support (14), characterized in that the retaining nose (17) is shaped onto the relatively short extension (16) and projects over the entire axial lenght of the extension (16), that the retaining nose (17) is oriented in such a way that through the cross-sectional longitudinal axes of the hinge pin support (14) and the retaining nose (17) an angle of approximately 45° and in particular approximately 40 ± 10° is formed, that the stop (26) comprises a freely projecting rib (27, 28) displaced at the top and bottom, radially and axially to the bearing hole (24) and cooperating with the hinge pin support (14) parallel to the hinge pin (15), as well as a web (25) connecting the two ribs (27, 28), at right angles to the hinge pin (15) and cooperating with the retaining nose (17), that the ribs (27, 28) surround the hinge pin extension (16) and the pivoting area (31) of the retaining nose (17) on the associated sides and their ends (32, 33) in each case engage on the hinge pin support (14) if the tailboard is pivoted substantially vertically upwards or downwards and in the remaining pivoting angle range the hinge pin support (14) is freed and that the web (25) is located in the axial direction upstream of the pivoting area (31) of the retaining nose (17) and has a height such that it frees the retaining nose (17) in the axial direction in the case of a pivoting angle of the tailboard of approximately 45°, particularly approximately 40 ± 10° with respect to the vertical in the lower pivoting area.

2. Tailboard hinge according to claim 1, characterized in that the height of the bottom and top rib (27, 28) is such that up to a pivoting angle of the hinge pin support (14) or the particular tailboard of in each case up to 45° with respect to the vertical they are located upstream of the hinge pin support (14).

3. Tailboard hinge according to claims 1 or 2, characterized in that the bottom and top rib (27) have on their side facing the web (25) a downwardly increasing bevel.

4. Tailboard hinge according to one of the claims 1 to 3, characterized in that the transition area between the web (25) and the bottom rib (28) is substantially aligned with the bearing hole (24).

5. Tailboard hinge according to one of the preceding claims, characterized in that the hinge pin-side hinge part (10) is screwed in the vicinity of the bottom or top rib (27, 28).

6. Tailboard hinge according to one of the preceding claims, characterized in that the hinge pin (15) is extended beyond the bearing hole (24) and that the bearing hole-side hinge part (20) is screwed behind the hinge pin extension.


**Revendications**

1. Charnière de hayon avec une pièce de charnière côté hayon (10) dont le support de gond (14) présente un gond (15) et un prolongement (16) axialement opposé au gond (15), une pièce de charnière (20) présentant un oeil de palier (24) comme logement du gond (15), du côté face en charge, ainsi qu'une sécurité fonction de l'angle de pivotement, qui comporte sur la pièce de charnière (20) du côté face en charge contre l'échappement du fond un nez de butée (17) dépassant radialement du gond (15) et une butée (26) présentant des emboîtements et coopérant avec le nez de butée (17) et le support de gond (14), caractérisée en ce que le nez de butée (17) est formé au prolongement (16) relativement court et est en contact sur toute la longueur axiale du prolongement (16), en ce que le nez de butée (17) est orienté de telle façon qu'il y a un angle d'environ 45°, notamment environ 40 ± 10° entre les axes longitudinaux de la coupe transversale du support de charnière (14) et du nez de butée (17), en ce que la butée (26) est constituée d'une nervure (27, 28) inférieure et supérieure, se détachant librement se développant en décalage radial et axial par rapport à l'oeil de palier (24), parallèlement au gond (15), coopérant avec le support de gond (14), ainsi que d'une entretoise (25) reliant les deux nervures (27, 28) s'étendant transversalement au gond (15) et coopérant avec le nez de butée (17), en ce que les nervures (27, 28) entourent le prolongement de gond (16) et le domaine de pivotement (31) du nez de butée (17) sur les faces correspondantes, et ainsi leurs faces frontales (32, 33) reposent respectivement contre le support de gond (14), quand le hayon est pivoté essentiellement verticalement vers le haut ou vers le bas, et dans le domaine angulaire de pivotement restant, libèrent le support de gond (14) et en ce que l'entretoise (25) est placée en sens axial en avant du domaine de pivotement (31) du nez de butée (17) et présente une hauteur telle, qu'elle libère le nez de butée (17) en sens axial pour un angle de pivotement du hayon d'environ 45 degrés, notamment environ 40 degrés ± 10 degrés par rapport à la verticale dans le domaine inférieur de pivotement.

2. Charnière de hayon selon la revendication 1, caractérisée en ce qu'on dimensionne la hauteur des nervures supérieure et inférieure (27, 28), de sorte qu'elles se situent en avant du support de gond (14) jusqu'à un angle de pivotement du support de gond (14) ou du hayon correspondant pouvant atteindre 45 degrés par rapport à la verticale.

3. Charnière de hayon selon la revendication 1 ou 2, caractérisée en ce que les nervures (27, 28) inférieure et supérieure présentent sur leur face tournée vers l'entretoise un chanfrein augmentant vers le bas.

4. Charnière de hayon selon l'une des revendications 1 à 3, caractérisée en ce que la zone de transition entre l'entretoise (25) et la nervure inférieure (28) est essentiellement alignée avec l'oeil de palier (24).

5. Charnière de hayon selon l'une des revendications précédentes, caractérisée en ce que la fixation par vissage de la pièce de charnière (10) du côté gond se fait dans la zone de la nervure inférieure ou de la nervure supérieure (27, 28).

6. Charnière de hayon selon l'une des revendications précédentes, caractérisée en ce que le gond (15) se prolonge au-delà de l'oeil de palier (24) et en ce que la fixation par vissage de la pièce de charnière (20) du côté de l'oeil de palier est située derrière le prolongement de charnière.

# FIG.1

# FIG.2

# FIG.3

# FIG.4

# FIG.5

# FIG.6

# FIG.7